# EUROPÄISCHE PATENTSCHRIFT

(11) **EP 2 485 910 B1**
(45) Veröffentlichungstag und Bekanntmachung des Hinweises auf die Patenterteilung: **23.10.2013**
(21) Anmeldenummer: 10752763.2
(22) Anmeldetag: 02.09.2010
(51) Int. Cl.: B60K 15/03, F17C 1/12, F17C 3/02

(54) **VERWENDUNG EINES BEHÄLTERS FÜR EIN TIEFKALTES FLUID**
USE OF A CONTAINER FOR A REFRIGERATED FLUID
UTILISATION D'UN RÉSERVOIR POUR UN FLUIDE CONGELÉ

(30) Priorität: 10.10.2009 DE 102009049022
(43) Veröffentlichungstag der Anmeldung: 15.08.2012
(73) Patentinhaber: Bayerische Motoren Werke Aktiengesellschaft, 80809 München (DE)
(72) Erfinder: BAUER, Michael, 85774 Unterföhring (DE); FRANKE, Torsten, 81479 München (DE)
(86) Internationale Anmeldenummer: PCT/EP2010/062904
(87) Internationale Veröffentlichungsnummer: WO 2011/042268

(56) Entgegenhaltungen:
- DE-A1- 4 116 066
- DE-A1-102005 014 479
- DE-C1- 10 055 104
- GB-A- 2 318 861
- JP-A- 2008 285 113

## Beschreibung

Die Erfindung betrifft die Verwendung eines Behälters für ein tiefkaltes Fluid mit einem Außenbehälter und einem Innenbehälter, zwischen denen ein eine Superisolation enthaltender evakuierter Zwischenraum liegt und wobei die Superisolation durch mehrere Lagen von mit einer Metallschicht versehenen Folien gebildet ist, die durch Abstandshalter, vorzugsweise in Form eines Isoliermaterials, voneinander getrennt sind, sowie einen entsprechenden Behälter. Zum Stand der Technik wird beispielshalber auf die DE 10 2005 014 479 A1 verwiesen und ferner auf die grundsätzlich bekannten elektrischen Kunststofffolien-Kondensatoren (im weiteren FolienKondensatoren genannt). Dies sind elektrische Kondensatoren mit isolierenden Kunststofffolien als Dielektrikum, bei denen dünne Folien mit den Elektroden versehen und dann als Wickel oder geschichtet aus Einzellagen zu einem Kondensator zusammengefügt sind (Definition aus "Wikipedia").

Ein Behälter wie oben angegeben kann als Tank für kryogenen Wasserstoff in einem Kraftfahrzeug zum Einsatz kommen, das diesen Wasserstoff als Kraftstoff zur Versorgung vorzugsweise des Fahrzeug-Antriebsaggregats mitführt. Solche künftigen Kraftfahrzeuge können auch einen Hybridantrieb aufweisen, d.h. wahlweise auch oder zusätzlich von einem Elektromotor angetrieben werden, wobei ein Speicher für elektrische Energie vorzusehen ist. Elektrische Energie wird in einem Kraftfahrzeug aber auch zur Versorgung von Hilfsaggregaten verwendet und muss hierfür ebenfalls geeignet gespeichert werden.

Mit der vorliegenden Erfindung wurde nun ein besonders vorteilhafter elektrischer Energiespeicher für ein Fahrzeug aufgefunden, das mit einem Behälter wie eingangs angegeben ausgestattet ist, d.h. mit einem Behälter für ein tiefkaltes Fluid mit einem Außenbehälter und einem Innenbehälter, zwischen denen ein eine Superisolation enthaltender evakuierter Zwischenraum liegt und wobei die Superisolation durch mehrere Lagen von mit einer Metallschicht versehenen Folien gebildet ist, die durch Abstandshalter vorzugsweise in Form eines Isoliermaterials voneinander getrennt sind. Demnach wird nämlich dieser Behälter als Speicher für elektrische Energie verwendet, indem die Folien als Folienkondensator(en) wirken und hierfür geeignet elektrisch kontaktiert sind, so dass an entsprechende elektrische Anschlüsse an der Außenseite dieses Behälters eine elektrische Spannung anlegbar ist (= Aufgabe und Lösung der vorliegenden Erfindung).

Mit der vorliegenden Erfindung wird eine besonders vorteilhafte Funktionsvereinigung aufgezeigt, indem der Behälter zur Speicherung des Kraftstoffs (in Form von kryogenem Wasserstoff) mit nur relativ geringen Änderungen oder Zusatzmaßnahmen gleichzeitig als Speicher von elektrischer Energie verwendet werden kann. Es wurde nämlich erkannt, dass die als Superisolation im Behälter vorgesehenen und insbesondere zur Bildung einer Reflexionsschicht mit einem Metall beschichteten Folien gleichzeitig einen (grundsätzlich bekannten) Folienkondensator bilden können. Dabei kann die über geeignete elektrische Anschlüsse zugeführte elektrische Ladung in der metallischen Beschichtung der Folien, die dann als Elektroden des Kondensators fungiert, gespeichert werden, während entweder die Folien alleine oder die Folie zusammen mit den Abstandshaltern bzw. der Isolationsschicht und dem Vakuum zwischen dem Innenbehälter und Außenbehälter als Dielektrikum des Kondensators bzw. von mehreren, durch die Vielzahl von Folien-Lagen gebildeten Einzel-Kondensatoren wirken, die geeignet zu einer Summen-Kapazität zusammengeschaltet sind, die vorliegend ebenfalls unter den Begriff "Folien-Kondensator" fallen soll. Was die genannte Zusammenschaltung betrifft, so kann es sich um Reihen- oder Parallelschaltung handeln. Wenn dabei die Folien nur einseitig mit einer Metallschicht - aus Gewichtsgründen und Kostengründen vorzugsweise auf Aluminiumbasis - versehen sind, so sind die Abstandshalter bzw. die Isolierschicht sowie das Vakuum zwischen einander benachbarten Folien zwangsläufig Bestandteil des Dielektrikums des Kondensators, während dann, wenn beide Oberflächen der Folie(n) mit einer Metallschicht versehen sind, je nach elektrischer Verschaltung mehrerer Folien entweder nur die jeweilige Folie selbst oder die Folien zusammen mit den Abstandshaltern bzw. der Isolationsschichten und dem Vakuum das Dielektrikum bilden. Dabei sei (nochmals) darauf hingewiesen, dass beim bekannten Stand der Technik die besagten Folien unter anderem zur Bildung einer Reflexionsschicht für die Wärmestrahlung bereits einseitig metallisch beschichtet sind. Genannt seien in diesem Zusammenhang die sog. biaxial orientierten Polyester-Folien ("boPET"), die bspw. unter dem Markennamen Mylar verkauft werden und durch Sputtern mit Aluminium beschichtet sein können. Laut "Wikipedia" werden solche Folien bereits heute in Folienkondensatoren verwendet.

Wenngleich bei den derzeit in Kleinserie befindlichen sog. Kryotanks für Personenkraftwagen circa 50 bis 70 Folienlagen vorgesehen sind, so dass diese eine Gesamtfläche von circa 100 Quadratmetern beschreiben und somit den thermischen Isolationsraum zwischen dem Außenbehälter und Innenbehälter mit der vorliegenden Erfindung einer zusätzlichen Nutzung als elektrischer Energiespeicher von nicht zu vernachlässigender Ladekapazität zuführen können, kann diese Kapazität bzw. die elektrische Kapazität eines erfindungsgemäßen Folien-Kondensators in seiner Gesamtheit insbesondere bei relativ geringer elektrischer Spannung weiter gesteigert werden, wenn die Folie(n) aus Halbleitermaterial besteht oder bestehen. Eine solche elektrische Halbleiter-Eigenschaft besitzen beispielsweise Polyacetylen oder PTCDA (3,4,9,10-Perylentetracarbonsäuredianhydrid). Mit derartigen Materialien kann dann quasi eine pn-Diode oder pin-Diode oder eine Schottky-Diode gebildet werden, die jeweils eine elektrische Kapazität darstellen.

Ebenfalls im Sinne einer vorteilhaften Funktionsvereinigung kann die elektrische Kontaktierung der Metallschichten der Folien über die Aufhängungsstruktur des Innenbehälters im Außenbehälter geführt sein, wobei diese dem Fachmann bekannte Aufhängungsstruktur entweder geeignete elektrische Leiter tragen oder diese Leiter zumindest abschnittsweise selbst darstellen kann.

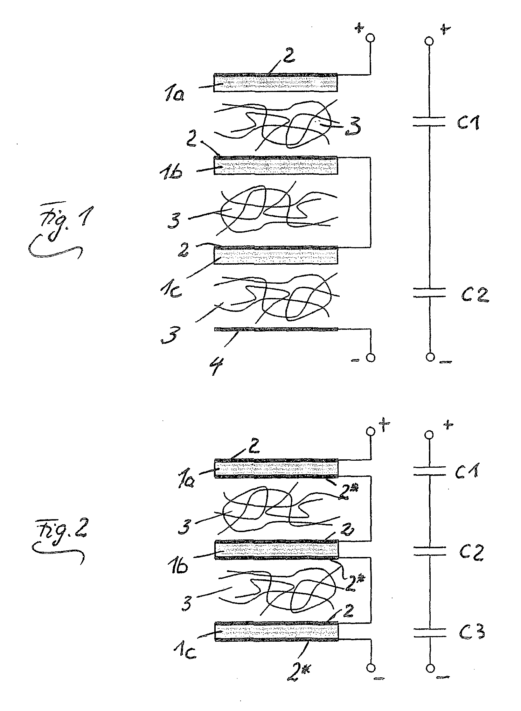

In den beigefügten Figuren 1 - 4 sind jeweils in der linken Bildhälfte drei unter Zwischenlage eines als Abstandshalter fungierenden Isolationsmaterials übereinander angeordnete Folien mit Metallschicht abstrakt dargestellt, die miteinander solchermaßen elektrisch verschaltet sind, dass hierdurch eine Zusammenschaltung von elektrischen Kondensatoren gebildet wird, die jeweils in der rechten Bildhälfte in Form eines üblichen elektrischen Schaltbildes dargestellt ist. In sämtlichen Figuren sind gleiche Elemente mit den gleichen Bezugsziffern gekennzeichnet.

So sind mit den Bezugsziffern 1a, 1b, 1 c die genannten drei übereinander angeordneten Folien gekennzeichnet, die Bestandteil eines Folienpakets sind, das als "Superisolation" im Vakuumraum zwischen einem hier nicht figürlich dargestellten Innenbehälter und Außenbehälter eines sog. Kryotanks vorgesehen ist, so wie dies bspw. in der eingangs genannten DE 10 2005 014 479 A1 gezeigt ist. Jede Folie ist zumindest einseitig, d.h. auf einer ihrer beiden Oberflächen mit einer Metallschicht 2 versehen, d.h. metallisch beschichtet, bspw. mit Aluminium. Im Fall einer beidseitigen Beschichtung trägt die zweite Metallschicht die Bezugsziffer 2*. Jeweils zwischen zwei übereinander liegenden Folien 1 a, 1b oder 1b, 1 c ist ein Isolationsmaterial 3 vorgesehen, das als Abstandshalter fungiert, für welche ebenfalls die Bezugsziffer 3 verwendet wird.

An jeder Metallschicht 2, 2* ist eine elektrische Kontaktierung vorgesehen und es sind in den verschiedenen Ausführungsbeispielen diese elektrischen Kontaktierungen über nicht mit einer Bezugsziffer versehene als Strich dargestellte elektrische Leiter in unterschiedlicher Weise miteinander derart verbunden, dass hierdurch elektrische Kondensatoren Cx (x = 1, 2, 3, ...) in unterschiedlicher Schaltungsanordnung gebildet werden, deren Elektroden letztlich mit dem Pluspol (+) oder dem Minuspol (-) einer Spannungsquelle verbunden sind.

Beim Ausführungsbeispiel nach Fig.1 ist jede Folie 1 a, 1 b, 1 c nur einseitig mit einer Metallschicht 2 versehen, so dass durch zwei einander benachbarte einseitig metallisch beschichtete Folien 1 a, 1 b ein erster Kondensator C1 gebildet wird. Für die Bildung eines zweiten Kondensators C2 ist hier aufgrund der Tatsache, dass nur drei Folien vorhanden sind, zusätzlich zur dritten Folie 1 c eine Hilfselektrode 4 vorgesehen. Diese beiden Kondensatoren C1, C2 sind dann in Reihe geschaltet.

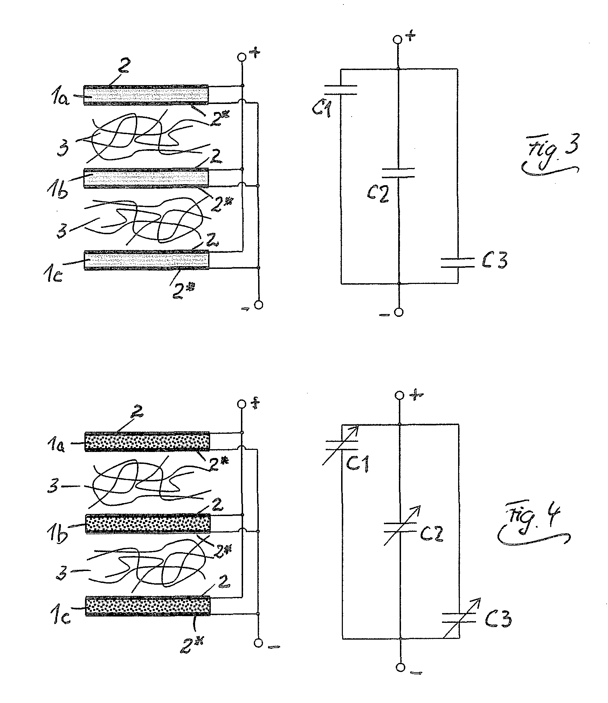

Bei den weiteren Ausführungsbeispielen nach den Figuren 2, 3 und 4 ist jede Folie 1 a, 1b, 1 c beidseitig metallisch beschichtet, d.h. auf jeder der beiden Folien-Oberflächen befindet sich eine Metallschicht 2 bzw. 2*. Hierbei bildet jede Folie 1 a, 1 b, 1 c für sich alleine einen elektrischen Kondensator C1 bzw. C2 bzw. C3. Beim Ausführungsbeispiel nach Fig.2 sind diese drei Kondensatoren C1, C2, C3 in Reihe geschaltet, während sie beim Ausführungsbeispiel nach Fig.3 in Parallelschaltung angeordnet sind.

Beim Ausführungsbeispiel nach Fig.4 ist die Schaltungsanordnung wie bei Fig.3, jedoch besteht hier jede Folie 1 a, 1b, 1 c aus einem Material mit der Eigenschaft eines elektrischen Halbleiters.

## Patentansprüche

1. Verwendung eines Behälters für ein tiefkaltes Fluid mit einem Außenbehälter und einem Innenbehälter, zwischen denen ein eine Superisolation enthaltender evakuierter Zwischenraum liegt und wobei die Superisolation durch mehrere Lagen von mit einer Metallschicht (2, 2*) versehenen Folien (1 a, 1b, 1c) gebildet ist, die durch Abstandshalter (3), vorzugsweise in Form eines Isoliermaterials (3), voneinander getrennt sind, als Speicher für elektrische Energie, indem die Folien (1 a, 1b, 1c) als Folienkondensator(en) (C1, C2, C3) wirken und hierfür geeignet elektrisch kontaktiert sind, so dass an entsprechende elektrische Anschlüsse (+, -) an der Außenseite dieses Behälters eine elektrische Spannung anlegbar ist.

2. Behälter für ein tiefkaltes Fluid mit einem Außenbehälter und einem Innenbehälter, zwischen denen ein eine Superisolation enthaltender evakuierter Zwischenraum liegt und wobei die Superisolation durch mehrere Lagen von mit einer Metallschicht (2, 2*) versehenen Folien (1 a, 1 b, 1 c) gebildet ist, die durch Abstandshalter (3), vorzugsweise in Form eines Isoliermaterials (3), voneinander getrennt sind,
**dadurch gekennzeichnet, dass** die Folien (1 a, 1b, 1 c) als Folienkondensator(en) (C1, C2, C3) zur Speicherung von elektrischer Energie wirken und hierfür geeignet elektrisch kontaktiert sind, so dass an entsprechende elektrische Anschlüsse (+, -) an der Außenseite dieses Behälters eine elektrische Spannung anlegbar ist.

3. Behälter nach Anspruch 2,
**dadurch gekennzeichnet, dass** auf beiden Seiten oder Oberflächen der Folie(n) (1 a, 1 b, 1 c) eine Metallschicht (2, 2*) vorgesehen ist.

4. Behälter nach Anspruch 2 oder 3,
**dadurch gekennzeichnet, dass** die Folie(n) (1 a, 1b, 1 c) aus einem Material mit der Eigenschaft eines Halbleiters besteht/bestehen.

5. Behälter nach einem der Ansprüche 2 - 4,
**dadurch gekennzeichnet, dass** mehrere Folien (1 a, 1b, 1 c) oder Folienkondensatoren (C1, C2, C3) elektrisch in Reihe geschaltet sind.

6. Behälter nach einem der Ansprüche 2 - 4,
**dadurch gekennzeichnet, dass** mehrere Folien (1 a, 1b, 1c) oder Folienkondensatoren (C1, C2, C3) elektrisch parallel geschaltet sind.

7. Behälter nach einem der vorangegangenen Ansprüche,
**dadurch gekennzeichnet, dass** die elektrische Kontaktierung der Metallschichten (2, 2*) der Folien (1 a, 1b, 1 c) über die Aufhängungsstruktur des Innenbehälters im Außenbehälter geführt ist.

## Claims

1. Use of a container for a cryogenic fluid with an external container and an internal container, between which an evacuated intermediate space containing a superinsulator is located and wherein the superinsulator is formed by a plurality of layers of foils (1 a, 1 b, 1c), which are provided with a metal layer (2, 2*) and are separated from one another by spacers (3), preferably in the form of an insulating material (3), as storage devices for electric energy, in that the foils (1a, 1b, 1 c) act as a foil capacitor/foil capacitors (C1, C2, C3) and are suitably electrically contacted for this, so that an electric voltage can be applied to corresponding electric terminals (+, -) on the outside of this container.

2. A container for a cryogenic fluid with an external container and an internal container, between which an evacuated intermediate space containing a superinsulator is located and wherein the superinsulator is formed by a plurality of layers of foils (1a, 1b, 1c), which are provided with a metal layer (2, 2*) and which are separated from one another by spacers (3), preferably in the form of an insulating material (3), **characterised in that** the foils (1a, 1b, 1 c) act as a foil capacitor/foil capacitors (C1, C2, C3) for storing electric energy and are suitably electrically contacted for this, so that an electric voltage can be applied to corresponding electric terminals (+, -) on the outside of this container.

3. A container according to claim 2, **characterised in that** a metal layer (2, 2*) is provided on both sides or surfaces of the foil(s) (1a, 1b, 1c).

4. A container according to claim 2 or 3, **characterised in that** the foil(s) (1a, 1b, 1 c) consists/consist of a material with the property of a semiconductor.

5. A container according to any one of claims 2 to 4, **characterised in that** a plurality of foils (1a, 1b, 1 c) or foil capacitors (C1, C2, C3) are electrically connected in series.

6. A container according to any one of claims 2 to 4, **characterised in that** a plurality of foils (1a, 1b, 1 c) or foil capacitors (C1, C2, C3) are electrically connected in parallel.

7. A container according to any one of the preceding claims, **characterised in that** the electric contacting of the metal layers (2, 2*) of the foils (1a, 1b, 1 c) is guided by way of the suspension structure of the internal container in the external container.

## Revendications

1. Utilisation d'un réservoir pour un liquide à basse température formé d'un réservoir extérieur et d'un réservoir intérieur entre lesquels un espace intermédiaire sous vide comporte une super isolation formée par plusieurs couches de films (1a, 1b, 1c) munis d'une couche métallique (2, 2*), ces films étant séparés les uns des autres par des organes d'écartement (3) de préférence sous la forme d'une matière isolante (3), comme accumulateur d'énergie électrique, les films (1a, 1b, 1c) fonctionnant comme des condensateurs à films (C1, C2, C3) branchés électriquement de manière appropriée pour recevoir une tension électrique sur les bornes électriques correspondantes (+, -) par le côté extérieur du réservoir.

2. Réservoir pour un liquide à basse température comportant un réservoir extérieur et un réservoir intérieur entre lesquels un espace intermédiaire sous vide comportant une super isolation, formée par plusieurs couches de films (1a, 1b, 1c) munis d'une couche métallique (2, 2*), ces films étant séparés les uns des autres par des organes d'écartement (3) de préférence sous la forme d'une matière isolante (3), réservoir **caractérisé en ce que**
les films (1a, 1b, 1c) fonctionnent comme un(des) condensateur(s) à film(s) (C1, C2, C3) pour stocker de l'énergie électrique et ils sont branchés de manière appropriée de façon à appliquer une tension électrique aux bornes électriques correspondantes (+, -) par le côté extérieur du réservoir.

3. Réservoir selon la revendication 2,
**caractérisé par**
une couche métallique (2, 2*) sur les deux côtés ou sur les faces supérieures des films (1a, 1b, 1c).

4. Réservoir selon la revendication 2 ou 3,
**caractérisé en ce que**
les films (1a, 1b, 1c) sont en une matière ayant les caractéristiques d'un semi-conducteur.

5. Réservoir selon l'une des revendications 2 à 4,
**caractérisé en ce que**
plusieurs films (1a, 1b, 1c) ou des condensateurs à films (C1, C2, C3) sont branchés en série.

6. Réservoir selon l'une des revendications 2 à 4,
**caractérisé en ce que**
plusieurs films (1a, 1b, 1c) ou des condensateurs à films (C1, C2, C3) sont branchés en parallèles.

7. Réservoir selon l'une des revendications précédentes,
**caractérisé en ce que**
le branchement électrique des couches métalliques (2, 2*) des films (1a, 1b, 1c) se fait par la structure de suspension du réservoir intérieur dans le réservoir extérieur.
